**Europäisches Patentamt**

**European Patent Office**

**Office européen des brevets**

(11) Veröffentlichungsnummer: **0 157 897**

**B1**

(12) **EUROPÄISCHE PATENTSCHRIFT**

(45) Veröffentlichungstag der Patentschrift:
**03.02.88**

(21) Anmeldenummer: **84104218.7**

(22) Anmeldetag: **13.04.84**

(51) Int. Cl.⁴: **A 47 J 43/16**

(54) Vorrichtung zum Einführen von Fett, Speck od.dgl. in Fleisch.

(43) Veröffentlichungstag der Anmeldung:
**16.10.85 Patentblatt 85/42**

(45) Bekanntmachung des Hinweises auf die Patenterteilung:
**03.02.88 Patentblatt 88/5**

(84) Benannte Vertragsstaaten:
**DE**

(56) Entgegenhaltungen:
**DE-A-1 951 507**
**DE-A-2 536 025**
**DE-C-64 006**
**DE-C-184 125**
**FR-A-402 927**
**FR-A-2 409 737**

(73) Patentinhaber: **Rödel, Siegfried, Marienstrasse 20, D-8500 Nürnberg (DE)**

(72) Erfinder: **Rödel, Siegfried, Marienstrasse 20, D-8500 Nürnberg (DE)**

(74) Vertreter: **Göbel, Matthias, Dipl.- Ing., Pruppacher Hauptstrasse 5-7, D-8501 Pyrbaum- Pruppach (DE)**

LIBER, STOCKHOLM 1988

**Beschreibung**

Die Erfindung betrifft eine Vorrichtung zum Einführen von Fett, Speck od.dgl. in Fleisch.

Bei einer diesem Zweck dienenden Vorrichtung sind am Ende eines Nadelkörpers mit Widerhaken versehene gabelförmig einander zugeordnete Anformungen für die Halterung von Speckstreifen vorgesehen. Diese bekannten Vorrichtungen zeigen den Nachteil, daß beim Einschieben des Nadelkörpers in das Fleisch der Speckstreifen desöfteren vom Nadelkörper abgestreift wird, wodurch insbesondere ein tiefes Einführen von Speck in Fleisch unmöglich bzw. erschwert wird. Eine weitere bekannte Vorrichtung (FR-A-402 927) weist einen hohlzylindrischen Nadelkörper mit einem sich über die Länge desselben erstreckenden Füllschlitz für den Speck auf. Bei dieser Vorrichtung erfolgt das Ausbringen des Specks aus dem Innenraum des Nadelkörpers mittels eines im Innenraum frei verschieblichen und im Bereich des Füllschlitzes erfaßbaren Ausstoßschiebers. Von Nachteil erweist sich bei dieser Vorrichtung jedoch, daß beim Einstecken des Nadelkörpers in Fleisch der Speck zurückgeschoben wird, was den Spickvorgang insbesondere bei zunehmender Tiefe erschwert. Es ist zwar durch eine auf den Nadelkörper aufsteckbare Abdeckung für den Füllschlitz versucht worden, verbessernd einzugreifen, jedoch führt die Abdeckung zu einer komplizierten Ausbildung der Vorrichtung und einer umständlichen Handhabung derselben.

Es ist Aufgabe der Erfindung, mit einfachen Maßnahmen das Einführen von Fett, Speck od.dgl. in Fleisch sicherer zu machen und mit beliebigen Tiefen zu ermöglichen.

Erfindungsgemäß ist diese Aufgabe dadurch gelöst, daß innerhalb des Innenraums des Nadelkörpers nahe dem freien Ende desselben eine schräg zur Mittellängsachse und zum freien Ende des Nadelkörpers hin sich erstreckende Haltespitze für den Speck angeordnet ist. Zweckmäßig ist der Nadelkörper an dem dem freien Ende abgewandten Ende mit einem hülsenförmigen Anschnitt versehen und mit diesem an einem Griffstück festgelegt. Bevorzugt sind der Nadelkörper und der Abschnitt aus einem ebenen Blechzuschnitt aufgebogen. Es ist auch denkbar, den Nadelkörper und den hülsenförmigen Abschnitt gegebenenfalls mit dem Griffstück als einstückigen Formteil aus einem plastisch verformbaren Werkstoff oder einem metallischen Werkstoff auszuführen. Bei der über den Füllschlitz insbesondere mit Speck füllbaren Vorrichtung ist der Speck auch über die Dauer des Einsteckvorganges verschiebungsfrei im Nadelkörper untergebracht und nach erfolgtem Einstecken des Nadelkörpers in das Fleisch vermittels einer unabhängigen Verschiebebewegung des Ausstoßschiebers, bevorzugt unter gleichzeitigem Zurückziehen des Nadelkörpers ausschiebbar. Auf diese Weise ist Speck in beliebigen Tiefen in das Fleisch sicher einzubringen, wobei der Ausstoßschieber durch verschieden große Vorschubbewegungen beliebig lange Speckteile aus dem Innenraum ausschiebt.

In Ausgestaltung der Vorrichtung ist vorgesehen, den Ausstoßschieber durch einen Zylinderabschnitt zu bilden. Es besteht auch die Möglichkeit, den Ausstoßschieber als Formteil zu gestalten und mit beliebiger Querschnittsform zu versehen. Es versteht sich, daß der Ausstoßschieber zu Bewegungen im Bereich des Füllschlitzes unmittelbar erfaßt werden kann oder zu einfachen Handhabungen mit einem Griffstück fest verbunden ist.

Weiter ist vorgesehen, die Haltespitze durch einen eingebogenen Anschnitt am Nadelkörper zu bilden und gemeinsam mit dem hülsenförmigen Abschnitt als Widerlager für den Ausstoßschieber in Anwendung zu bringen. Die Widerlager für den Ausstoßschieber können auch anderweitig beliebig, z. B. durch Eindrückungen, Einbiegungen am Nadelkörper gebildet sein.

Eine besonders leichte Handhabung der Vorrichtung ist noch dadurch erreichbar, wenn am freien Ende des Nadelkörpers eine angeformte Steckspitze angeordnet, insbesondere angeschnitten ist. Vorzugsweise kann das freie Ende der Steckspitze geringfügig nach außen zurückgebogen sein.

Es entspricht dem Erfindungsgedanken, daß die Vorrichtung nicht auf eine bestimmte Größe beschränkt und aus einem beliebigen Werkstoff herstellbar ist. Weiter ist vorgesehen, die Haltespitze durch einen eingebogenen Anshnitt am Nadelkörper zu bilden gemeinsam mit dem hülsenförmigen Abschnitt als Widerlager für den Ausstoßschieber in Anwendung zu bringen. Die Widerlager für den Ausstoßschieber können auch anderwertig beliebig, z. B. durch Eindrückungen, Einbiegungen am Nadelkörper gebildet sein.

Eine besonders leichte Handhabung der Vorrichtung ist noch dadurch zu erreichen, wenn am freien Ende des Nadelkörpers eine angeformte Steckspitze angeordnet, insbesondere angeschnitten ist. Vorzugsweise kann das freie Ende der Steckspitze geringfügig nach außen zurückgebogen sein.

Es entspricht dem Erfindungsgedanken, daß die Vorrichtung nicht auf eine bestimmte Größe beschränkt und aus einem beliebigen Werkstoff herstellbar ist.

Wie die Erfindung ausführbar ist, zeigt mit den für diese wesentlichen Merkmalen, das in der Zeichnung dargestellte Ausfürhrungsbeispiel. Hierin bedeuten:

Figur 1 eine Vorrichtung in Seitenansicht, teilweise im Schnitt,

Figur 2 eine Vorrichtung in Draufsicht und

Figur 3 einen Schnitt nach der Linie III-III der Figur 1.

In den Figuren ist mit 1 ein hohlzylindrischer Nadelkörper bezeichnet, der geringfügig nach oben gekrümmt ist. Der Nadelkörper 1 weist einen hülsenförmigen Abschnitt 2 auf und ist mittels diesem an einem Griffstück 3 festgelegt.

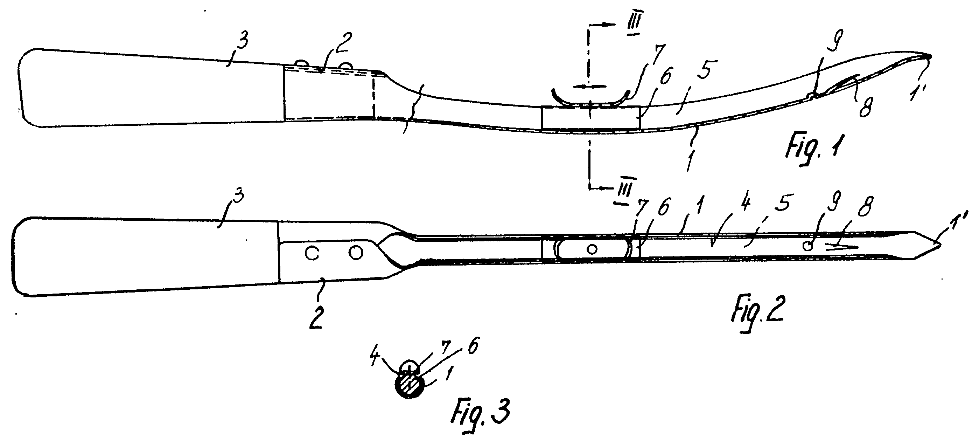

Über die Länge der Nadelkörpers 1 ersteckt sich, wie insbesondere die Fig. 2 erkennen läßt, ein Füllschlitz 4, über den das als Spickmaterial vorgesehene Fett, Speck od.dgl. in den Innenraum 5 des Nadelkörpers 1 einbringbar ist.

Im Innenraum 5 der Nadelkörpers 1 ist ein Ausstoßschieder 6 frei verschieblich angeordnet, der mittels einer Handhabe 7, die den Füllschlitz 4 oben überragt, verschiebbar ist. Der Ausstoßschieber 6 läßt sich zwischen zwei Endstellungen bewegen, wobei die eine Endstellung durch den hülsenförmigen Abschnitte 2 und die andere Endstellung durch einen zu einer Haltespitze ausgestellten Anschnitt 8 begrenzt ist. Es besteht die Möglichkeit, die Widerlager durch Eindrückungen 9 zu bilden.

Beim Ausführungsbeispiel ist der Nadelkörper 1 an seinem freien Ende 1' spitz zulaufend ausgeführt und geringfügig zurückgebogen. Hierdurch ergibt sich eine sichere Führung der Vorrichtung im Fleisch. Während beim Ausführungsbeispiel der Nadelkörper 1 und der hülsenförmigen Abschnitt 2 aus einem ebenen Blechzuschnitt aufgerichtet ist, besteht die Möglichkeit, den Nadelkörper 1 gegebenenfalls gemeinsam mit dem Abschnitt 2 durch einen Formteil, z. B. einem plastisch verformbaren Werkstoff oder einem metallischen Werkstoff herzustellen. Schließlich ist noch denkbar, Nadelkörper 1 und Abschnitt 2 einstückig mit dem Griffstück 3 herzustellen.

Für die Benutzung der Vorrichtung ist davon auszugehen, daß der Ausstoßschieber 6 zunächst in seine rückwärtige Endstellung gebracht ist. Danach kann über den Füllschlitz 4, z. B. Speck in den Innenraum 5 des Nadelkörpers 1 eingebracht werden, der durch den Anschnitt 8 im Innenraum 5 fixierbar ist. Nach erfolgtem Einführen des Nadelkörpers 1 in das Fleisch, wird durch eine Verschiebebewegung des Ausstoßschiebers 6 in Richtung des freien Endes der im Innenraum des Nadelkörpers 1 befindliche Speck (nicht gezeigt) ausgeschoben. Durch gleichzeitiges Zurückziehen der Vorrichtung aus der Fleisch verbleibt der Speck im Fleisch an der zuvor vom Nadelkörper eingenommenen Stelle.

Gemäß bevorzugter Ausgestaltung ist der Nadelkörper 1 des Ausführungsbeispiels vom Füllschlitz 4 her gesehen konkav gebogen. Es besteht auch die Möglichkeit den Nadelkörper mit gerader Mittellängsachse auszuführen.

## Patentansprüche

1. Vorrichtung zum Einführen von Fett, Speck od.dgl. in Fleisch mit einem hohlzylindrischen Nadelkörper (1) und einem über die Länge des Nadelkörpers sich erstreckenden Füllschlitz (4) für den Speck sowie einem im Innenraum (5) des Nadelkörpers (1) frei verschieblich ausgebildeten, im Bereich des Füllschlitzes (4) erfaßbaren Ausstoßschieber (6), dadurch gekennzeichnet, daß innerhalb des Innenraums (5) des Nadelkörpers (1) nahe dem freien Ende desselben eine schräg zur Mittellängsachse und zum freien Ende des Nadelkörpers hin sich erstreckende Haltespitze (8) für den Speck angeordnet ist.

2. Vorrichtung nach Anspruch 1, dadurch gekennzeichnet, daß der Nadelkörper (1) an dem dem freien Ende abgewandten Ende einen hülsenförmigen Abschnitt (2) aufweist und mit diesem an einem Griffstück (3) festgelegt ist.

3. Vorrichtung nach Anspruch 1 und 2, dadurch gekennzeichnet, daß der Nadelkörper (1) und der Abschnitt (2) aus einem ebenen Blechzuschnitt aufgebogen ist.

4. Vorrichtung nach Anspruch 1, dadurch gekennzeichnet, daß der Ausstoßschieber (6) durch einen Zylinderabschnitt gebildet ist.

5. Vorrichtung nach Anspruch 4, dadurch gekennzeichnet, daß mit dem Ausstoßschieber (6) ein Griffstück (7) fest verbunden ist.

6. Vorrichtung nach Anspruch 1, dadurch gekennzeichnet, daß die Haltespitze (8) durch einen eingebogenen Anschnitt am Nadelkörper gebildet ist.

7. Vorrichtung nach Anspruch 1, 2 und 5, dadurch gekennzeichnet, daß die Haltespitze (8) und der hülsenförmige Abschnitt (2) Widerlager für den Ausstoßschieber (6) bilden.

8. Vorrichtung nach Anspruch 1, 2 und 8, dadurch gekennzeichnet, daß die Widerlager für den Ausstoßschieber (6) durch Eindrückungen, Einbiegungen (9) am Nadelkörper (1) gebildet sind.

9. Vorrichtung nach Anspruch 1, dadurch gekennzeichnet, daß der Nadelkörper (1) und der Abschnitt (2) durch ein Formteil gebildet ist.

10. Vorrichtung nach Anspruch 9, dadurch gekennzeichnet, daß eine Steckspitze (1') am Nadelkörper (1) angeschnitten und das freie Ende der Steckspitze (1') geringfügig nach außen zurückgebogen ist.

11. Vorrichtung nach Anspruch 1, dadurch gekennzeichnet, daß der Nadelkörper in Längsrichtung konkav gebogen ist.

## Claims

1. A device for inserting fat, lard or sim. into meat comprising a hollow cylindrical needle (1) and a filling groove (4) for the lard running the length of the needle and a free moving ejector slide (6) in the interior space (5) of the needle (1), which can be taken hold of in the filling groove (4), in which a retaining pin (8) for the lard inclined to the central longitudinal axis and running towards the open end of the needle is provided within the interior space (5) of the needle (1) near its open end.

2. A device as in claim 1 in which the needle (1) has a sleeve-like section (2) on the end away from the open end and is attached by this to a handle (3).

3. A device as in claim 1 and 2 in which the needle (1) and the section (2) are bent up from a smooth section of sheet metal.

4. A device as in claim 1 in which the ejector slide (6) is formed by a cylindrical section.

5. A device as in claim 4 in which a handle is firmly attached to the ejector slide (6).

6. A device as in claim 1 in which the retaining pin (8) is formed on the needle by means of a bent notch.

7. A device as in claim 1, 2 and 5 in which the retaining pin (8) and the sleeve-like section (2) form abutments for the ejector slide (6).

8. A device as in claim 1, 2 and 6 in which the abutments for the ejector slide (6) are formed by indentations, bumps (9) on the needle (1).

9. A device as in claim 1 in which the needle (1) and the section (2) are formed by a shaped piece.

10. A device as in claim 9 in which a tip (1') is cut into the needle (1) and the open end of the tip (1') is slightly bent back outwards.

11. A device as in claim 1 in which the needle is longitudinally concave.

**Revendications**

1. Dispositif servant à introduire du lardon ou du lard dans un morceau de viande composé d'un corps de brochette creuse et cylindrique (1) et d'une fente (4) située sur toute la longueur de la brochette pour recevoir le lardon ainsi que d'un éjecteur (6) pouvant être déplacé à l'intérieur (5) du corps de brochette (1) et opéré dans la zone de la fente de remplissage (4), caractérisé par le point qu'à l'intérieur (5) du corps de la brochette (1) se trouve une pointe de retenue (8) du lardon qui est située près de l'extrémité libre du corps et obliquement à l'axe centrale et à l'extrémité libre du corps de brochette.

2. Dispositif selon la revendication 1 se distingue par le fait que le corps de brochette (1) est équipé d'une section en forme de douille (2) à l'extrémité opposant au bout libre qui passe en une poignée (3) et y est fixée.

3. Dispositif selon les revendications 1 et 2 se distingue par le fait que le corps de brochette (1) et la section (2) sont formés d'une tôle pliée.

4. Dispositif selon la revendication 1 se distingue par le fait que l'éjecteur (6) est formé par une pièce cylindrique.

5. Dispositif selon la revendication 4 se distingue par le fait qu'une poignée (7) est fermement reliée à l'éjecteur (6).

6. Dispositif selon la revendication 1 se distingue par le fait que la pointe de retenue (8) est formée par une courbure du corps de brochette.

7. Dispositif selon les revendications 1, 2 et 5 se distingue par le fait que la pointe de retenue (8) et la section en forme de douille (2) présentent des contre-supports pour l'éjecteur (6).

8. Dispositif selon les revendications 1, 2, et 6 se distingue par le fait que les contre-supports de l'éjecteur (6) sont formés par des niches, enfoncements (9) dans le corps de la brochette (1).

9. Dispositif selon la revendication 1 se distingue par le fait que le corps de brochette (1) et la section (2) présentent une pièce préformée.

10. Dispositif selon la revendication 9 se distingue par le fait qu'une pointe enfichable (1') sur le corps de la brochette (1) est entamée et l'extrémité libre de la pointe (1') est légèrement pliée vers l'extérieur.

11. Dispositif selon la revendication 1 se distingue par le fait que le corps de la brochette est concavement plié sur son axe longitudinale.

Fig. 1

Fig. 2

Fig. 3

0 157 897